Europäisches Patentamt

European Patent Office

Office européen des brevets

(11) Veröffentlichungsnummer: **0 031 923**
**B1**

(12) **EUROPÄISCHE PATENTSCHRIFT**

(45) Veröffentlichungstag der Patentschrift:
09.05.84

(51) Int. Cl.³: **F 16 J 9/20**, F 02 F 5/00

(21) Anmeldenummer: **80107843.7**

(22) Anmeldetag: **12.12.80**

(54) Kompressionsring für Kolben von Verbrennungsmotoren.

(30) Priorität: 04.01.80 DE 3000146
25.07.80 DE 3028222

(43) Veröffentlichungstag der Anmeldung:
15.07.81 Patentblatt 81/28

(45) Bekanntmachung des Hinweises auf die Patenterteilung:
09.05.84 Patentblatt 84/19

(84) Benannte Vertragsstaaten:
AT DE FR GB

(56) Entgegenhaltungen:
DE - A - 2 921 033
DE - B - 1 101 881
FR - A - 1 191 687
US - A - 1 369 592
US - A - 1 375 095
US - A - 1 416 673
US - A - 1 765 722

(73) Patentinhaber: **MAHLE GMBH, Patentabteilung
Pragstrasse 26-46, D-7000 Stuttgart 50 (DE)**

(72) Erfinder: **Gürtler, Rudolf W., Strümpfelbacherstrasse 98,
D-7056 Weinstadt 2 (DE)**

(74) Vertreter: **Pfusch, Volker, Dipl.-Ing., MAHLE GMBH,
Patentabteilung Pragstrasse 26-46,
D-7000 Stuttgart 50 (DE)**

**Beschreibung**

Die Erfindung betrifft einen Kompressionsring für Kolben von Verbrennungsmotoren.

Kompressionsringe dienen zur Dichtung des Verbrennungsraumes gegenüber dem Kurbelgehäuse. Sie müssen, um ihre Funktion einwandfrei erfüllen zu können, frei in den sie aufnehmenden Kolbenringnuten beweglich sein. Die freie Bewegbarkeit kann durch in der Ringnut sich aufbauende feste Ablagerungen wie besonders Ölkohle beeinträchtigt werden. Im ungünstigsten Fall bewirken die Ablagerungen ein Festsetzen des Ringes mit der Folge, dass die Ringe brandig werden und es dann zu Kolbenfressern kommen kann.

Den Aufbau von Ölkohle in der Ringnut versucht man bisher durch verschiedene konstruktive Massnahmen, wie z.B. durch bestimmte Feuerstegspiele beim Kolben, sowie entsprechende Auslegung der Ringnut und des Ringes selbst zu vermeiden. So ist es z.B. aus der FR-A-1 191 687 bekannt, die Ober- und Unterflanke eines Kolbenringes mit Ausnehmungen zu versehen. Die Ausnehmungen gehen dabei jeweils vom Innenumfang des Ringes aus und enden vor dem radialen Aussenumfang des Ringes, so dass dessen Lauffläche von den Ausnehmungen unberührt bleibt. Am radialen Innenumfang laufen die Ausnehmungen dagegen offen aus, so dass an der Ober- und Unterflanke dort zickzackförmige Randkonturen entstehen. Derartige Kolbenringe sollen bevorzugt in die erste Kolbenringnut eingesetzt werden. Die Ausnehmungen in den Ringflanken sollen in erster Linie dafür sorgen, dass Verbrennungsgas hinter den Kolbenring in die Ringnut eindringen kann, um den Kolbenring zur Erhöhung der Abdichtfunktion nach aussen zu spannen. Bei Bewegung des Kolbenringes in der Ringnut sollen die Ausnehmungen ferner dazu dienen, sich an Ober- und Unterflanke der Ringnut absetzende Ölkohle laufend abzuschaben und dadurch ein Festsetzen von Ölkohle an diesen Flanken von vornherein zu vermeiden. Die Ausnehmungen sind jedoch, da sie sich am Innenumfang des Ringes nicht über dessen gesamte axiale Höhe erstrecken, nicht geeignet, den Aufbau von Ölkohle im Nutengrund zu vermeiden. Ölkohleablagerungen im Nutengrund müssen jedoch unter allen Umständen vermieden werden, da sie im Laufe des Motorbetriebs, wenn sie von ausreichend fester Konsistenz sind, dazu führen, dass der Ring keine Radialbewegungen mehr ausführen kann. Man spricht dann davon, dass der Ring auf der Ölkohleablagerung reitet mit der Konsequenz, dass die Ringe brandig werden und die Kolben letztlich zu fressen beginnen.

Aus der US-A-1 369 592 ist darüber hinaus ein Kolbenring bekannt, bei dem axiale über die gesamte Höhe des Ringes verlaufende Ausnehmungen auf einem Teil des Innenumfanges angeordnet sind. Die durch die Ausnehmungen geschaffenen Kanten sind jedoch nicht dazu geeignet, den Ölkohleaufbau über den gesamten Umfang der Ringnut zu verhindern. Denn bei entstehender Ölkohle wird der Ring nicht in der Lage sein, sich zu drehen, so dass zumindest in den Bereichen, in denen der Ring an seinem Innenumfang keine Ausnehmungen aufweist, Ölkohle sich ungehindert aufbauen kann.

Hier Abhilfe durch Freihalten des Nutengrundes von Ölkohleablagerungen über den gesamten Umfang der Ringnut zu schaffen, ist die Hauptaufgabe der vorliegenden Erfindung.

Gelöst wird diese Aufgabe durch eine Ausbildung des Kompressionsringes nach den kennzeichnenden Merkmalen des Anspruchs 1.

Durch in bezug auf die Ringnut ständige Bewegung des Kompressionsringes in axialer, radialer und Umfangsrichtung während des Motorbetriebes verhindern die sich in gleichem Masse bewegenden scharfen Kanten bzw. Ausnehmungen am Innenumfang des Ringes das Ablagern von Ölkohle in den Freiräumen zwischen Ring und Nut. Sich dort doch etwa noch absetzende Ölkohle wird gegebenenfalls unmittelbar nach Entstehen von den scharfen Kanten wieder entfernt. Für die Wirksamkeit der Kanten müssen diese nicht nur stark genug ausgeprägt sein, sondern es muss auch sichergestellt sein, dass der Ring sich kontinuierlich dreht. Zur Erreichung der Drehbewegung sind den scharfen Kanten Flanken nach dem kennzeichnenten Teil des Anspruchs 1 zugeordnet. Bei den Kanten, die von den Ausnehmungen am Innenumfang des Ringes gebildet werden, wird die Kraftkomponente in Umfangsrichtung durch den Gasstrom am Inneren des Ringes durch die diesen Kanten zugeordneten schrägen Flankenabschnitte erzeugt.

Um die Ölkohle nicht nur am Aufbau im Nutengrund zu hindern, sondern auch eventuelle Ablagerungen zwischen Ringoberflanke und Ringnutflanke von vornherein zu verhindern, ist es vorteilhaft, auch die Oberfläche der Ringoberflanke mit einer Art Schabenkanten zu versehen. Nach Anspruch 2 werden zu diesem Zweck radial umlaufende Rillen vorgeschlagen.

Die scharfen Kanten nach Anspruch 1 müssen nicht direkt integrierter Bestandteil des Kolbenringes selbst sein, sie können vielmehr auch an einem zwischen dem Nutengrund und dem Kolbenring zusätzlich eingebrachten Zwischenring angeordnet sein. Dabei kann der Zwischenring zweckmässigerweise aus Federstahl sein, so dass die scharfen Kanten sich günstig durch federnde Spreizfüsschen erzeugen lassen.

Ausführungsbeispiele der Erfindung sind in der Zeichnung dargestellt.

Es zeigen:

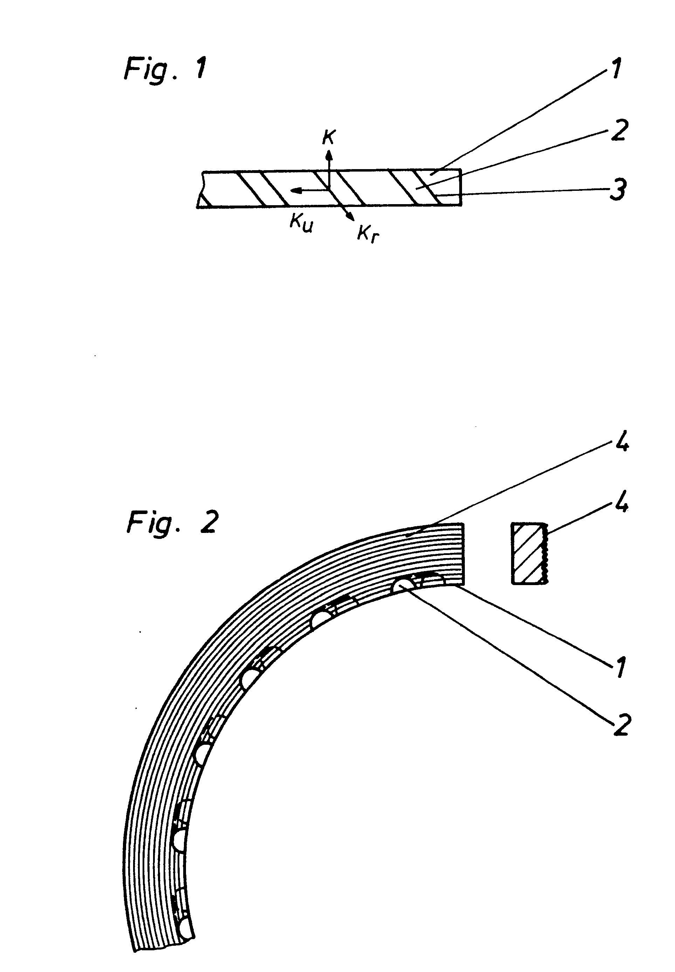

Fig. 1 die Ansicht eines Kompressionsringteilstückes mit nutenförmigen Ausnehmungen

Fig. 2 die Draufsicht auf das Kompressionsringteilstück nach Fig. 1.

Bei einem Kompressionsring 1 bilden schräge Ausnehmungen 2 scharfe Kanten 3. Alle Ausnehmungen 2 weisen an den Kanten 3 gleichgerichtete schräge Flanken auf, so dass die um das Innere des Kompressionsringes 1 teilweise strömenden Verbrennungsgase den Ring in Rotation versetzen. Das erfolgt dadurch, dass die Kraft K der den Kompressionsring umströmenden Gase an den schrägen Flanken der Ausnehmungen 2 in Kraftkomponenten $K_u$ und $K_r$ aufgeteilt wird. Die Komponente $K_u$ sorgt dafür, dass der Kolbenring in Umfangsrichtung gedreht wird. Die so aufgezwungene Drehbewegung gibt dem Kompressionsring die Kraft, die erforderlich ist, um mit den scharfen Kanten 3 den Aufbau von Öl-kohle zu vermeiden oder sich bereits aufbauende Ölkohle wieder abzukratzen. Anstelle der Ausnehmungen 2 können am Innenumfang des Kompressionsringes auch Vorsprünge mit scharfen Kanten 3 vorgesehen sein.

Die Kanten der Oberflanke des Kompressionsringes 1 nach Anspruch 2 werden am einfachsten durch Umfangskanten 4 erreicht.

Die scharfen Kanten 3 können auch durch Spreizfüsschen einem zweiten dem Kompressionsring 1 und dem Nutengrund der Ringnut des Kolbens eingebrachten Zwischenring aus Federstahl gebildet werden. Der Zwischenring kann am Ringstoss des Kompressionsringes mit dem Kompressionsring derart verbunden sein, dass beide Ringe gemeinsam rotieren.

## Patentansprüche

1. Kompressionsring (1) für Kolben von Verbrennungsmotoren bei dem über den Innenumfang verteilt eine Vielzahl von durch Ausnehmungen (2) oder Vorsprünge gebildeten Kanten vorgesehen sind, die sich jeweils über die gesamte axiale Höhe des Kom-pressionsringes (1) erstrecken, dadurch gekenn-zeichnet, dass allen Kanten (3) der Vorsprünge bzw. Ausnehmungen (2) mindestens ein zum Kreisumfang des Kompressionsringes (1) gleichsinnig ausgerichteter Flankenabschnitt derart zugeordnet ist, dass alle diese Abschnitte aus auf den Kompressionsring (1) wirkenden Kräften (K) der den Kom-pressionsring (1) umströmenden Gase Kraftkompo-nenten ($K_u$) erzeugen, die eine Rotation des Kompressionsringes (1) bewirken.

2. Kompressionsring nach Anspruch 1, dadurch gekennzeichnet, dass die Oberfläche seiner Oberflanke umlaufende scharfe Kanten (4) aufweist.

3. Kompressionsring nach Anspruch 1 oder 2, dadurch gekennzeichnet, dass die Vorsprünge als federnde Spreizfüsschen an einem am Innenumfang des Kompressionsringes (1) anliegenden separaten Zwischenring ausgebildet sind.

## Revendications

1. Bague de compression (1) pour pistons de moteurs à combustion interne, dans laquelle est prévu un grand nombre d'arêtes qui, réparties sur la circonférence interne et formées par des évidements (2) ou des saillies, s'étendent à chaque fois sur toute la hauteur axiale de la bague de compression (1), caractérisée par le fait qu'au moins un tronçon de flanc orienté dans le même sens vers la périphérie circonférentielle de la bague de compression (1) est associé à toutes les arêtes (3) des saillies ou évidements (2), de telle manière que tous ces tronçons engendrent, à partir des forces (K) appliquées à la bague de compression (1) par les gaz circulant autour de cette bague de compression (1), des composantes de force ($K_u$) qui provoquent une rotation de la bague de compression (1).

2. Bague de compression selon la revendication 1, caractérisée par le fait que la surface de son flanc supérieur présente des arêtes vives circonférentielles (4).

3. Bague de compression selon la revendication 1 ou 2, caractérisée par le fait que les saillies sont réalisées sous forme de languettes élastiques d'écartement, sur une bague intermédiaire séparée appliquée contre la circonférence interne de la bague de compression (1).

## Claims

1. A compression ring (1) which is intended for pistons of internal-combustion engines and on which there are provided, distributed over the inner circumference, a plurality of edges which are formed by recesses (2) or projections and which extend over the entire axial height of the compression ring (1), characterised in that there is associated with all the edges (3) of the projections or recesses (2) at least one flank section, which is aligned with the periphery of the compression ring (1) in the same sense, in such a way that all these sections produce from forces (K), acting on the compression ring (1), of the gases flowing around the compression ring (1) force com-ponents ($K_u$) which cause the compression ring (1) to rotate.

2. A compression ring as claimed in claim 1, characterised in that the surface of its top flank has circumferential sharp edges (4).

3. A compression ring as claimed in claim 1 or 2, characterised in that the projections are formed as small resilient expanding feet on a separate intermediate ring which bears against the inner circumference of the compression ring (1).

Fig. 1

Fig. 2